# EUROPÄISCHE PATENTSCHRIFT

(11) **EP 3 434 737 B1**
(45) Veröffentlichungstag und Bekanntmachung des Hinweises auf die Patenterteilung: **04.01.2023**
(21) Anmeldenummer: 17183262.9
(22) Anmeldetag: 26.07.2017
(51) Int. Cl.: C09B 67/46, C09D 17/00

(54) **MODIFIZIERTE PIGMENTE UND IHRE VERWENDUNG**
MODIFIED PIGMENTS AND THEIR USE
PIGMENTS MODIFIÉS ET LEUR UTILISATION

(43) Veröffentlichungstag der Anmeldung: 30.01.2019
(73) Patentinhaber: Evonik Operations GmbH, 45128 Essen (DE)
(72) Erfinder: CAVALEIRO, Pedro, 41749 Viersen (DE); BOUWMAN, Matthias, 40476 Düsseldorf (DE); SENTER, Pascal, 47229 Duisburg (DE); FAVRESSE, Philippe, 40880 Ratingen (DE)
(74) Vertreter: Evonik Patent Association

(56) Entgegenhaltungen:
- EP-A1- 1 566 413
- EP-A1- 2 600 198
- EP-A1- 2 896 666
- EP-A1- 3 266 834
- WO-A1-2008/091524
- WO-A2-2012/004257
- DE-A1-102007 018 812
- US-A1- 2002 096 089
- US-A1- 2016 160 050
- US-A1- 2016 369 120

## Beschreibung

Die vorliegende Erfindung betrifft modifizierte organische Pigmente, deren Herstellung und Verwendung in Farben, Lacken, Druckfarben und sonstigen Beschichtungsstoffen.

Pigmente sind farbgebende Substanzen, die im Anwendungsmedium unlöslich dispergiert vorliegen. Anwendungsmedien sind beispielsweise organische Lösungsmitteln, Farben, Lacke, Pigmentpräparationen, Druckfarben und sonstige Beschichtungen, in denen das Pigment eingearbeitet wird. Üblicherweise werden die bei der Synthese entstandenen Rohpigmente zermahlen oder zerkleinert. Zur Überführung eines Rohpigments in Pigment- oder Präpigmentform sind verschiedene Feinverteilungsverfahren bekannt, sog. Trockenmahl- und Nassmahlverfahren. Bei den Trockenmahl- und Nassmahlverfahren kommt es durch Einsatz von Mahlkörpern zu Abrieb und damit zu Eintrag von Fremdstoffen ins Produkt.

Bei anderen bekannten Verfahren zur Herstellung partikulärer Pigmente werden die pulverförmigen Pigmente durch Reaktionen in der Gasphase, in einer Flamme, durch Sol-Gel-Prozesse, im Plasma oder durch Desublimation erzeugt. Partikel mit kleinem Durchmesser neigen jedoch besonders stark zu agglomerieren und müssen deshalb stabilisiert werden.

Die Stabilisierung der Pigmente ist in der Lackindustrie von großer Bedeutung, denn Pigmente bestimmen als wichtiger Formulierungsbestandteil das optische Erscheinungsbild und die physikalisch-chemischen Eigenschaften einer Beschichtung. Damit sie in der Beschichtung ihre Wirkung optimal entfalten können, müssen sie während des Dispergierprozesses gleichmäßig und feinteilig im Lack verteilt werden. Die Verteilung muss stabilisiert werden, damit dieser Zustand bei der Herstellung, der Lagerung, der Verarbeitung und der anschließenden Filmbildung erhalten bleibt. Eine Wiedervereinigung der Primärteilchen und Aggregate kann zu Bodensatzbildung, Viskositätserhöhung, Glanzgradverlusten, ungenügender Farbtiefe, geringem Deckvermögen, Auf- und Ausschwimmen der Pigmente und schlecht reproduzierbaren Farbtönen führen.

Für die zuverlässige Dispergierung und Stabilisierung von Pigmenten in Beschichtungssystemen verwendet man im allgemeinen Dispergiermittel, um so möglichst hohe Füllgrade zu realisieren. Die Dispergiermittel benetzen und belegen als oberflächenaktive Materialien die Oberfläche der zu dispergierenden Partikel und stabilisieren diese gegen eine unerwünschte Reagglomeration.

Anwendungsmedien und Beschichtungssysteme werden im Rahmen der vorliegenden Erfindung als Synonyme verwendet.

In wässrigen Pigmentpräparationen werden Pigmente ausschließlich durch Netz- und Dispergiermittel stabilisiert, während in lösemittelhaltigen Pigmentpräparationen die Dispergierung oft durch Dispergierharze unterstützt wird (Brock, Groteklaes, Mischke, Lehrbuch der Lacktechnologie, Vincentz Verlag Hannover 1998, S. 240). EP 3 266 834 umfasst eine Pigmentpräparation, enthaltend ein Pigment und ein flockungsstabilisierendes Medium. WO 2012/004257 beschreibt Farbmittelpräparationen unter Zuhilfenahme eines temperaturstabilen Dispergieradditivs, was der üblichen Vorgehensweise entspricht. EP 1 566 413 offenbart wässrige Pigmentpastensysteme mit ionischen Flüssigkeiten als Dispersionsmittel ohne Modifizierung der Pigmente. EP 2 896 666 beschreibt Harzpartikeldispersionen, bestehend aus einem Pigment, einem Harz und einer aziden organischen Verbindung, wobei das Harz und die azide organische Verbindung das Pigment zur Verbesserung der Lösungsmittelbeständigkeit bzw. Reibechtheit des Produkts ummanteln.

Darüber hinaus ist aus dem Stand der Technik bekannt, partikuläre Pigmente in einen Zustand zu versetzen, aus dem sie möglichst leicht weiterverarbeiten werden können.

Beispielsweise beschreibt die WO 03/039716 eine Vorrichtung und ein Verfahren zur Herstellung von nanopartikulären Pigmenten, bei dem ein Pigment-Vormaterial verdampft und anschließend kondensiert und in einer Sammelflüssigkeit gesammelt wird.

Die Aufgabe der vorliegenden Erfindung besteht daher darin, organische Pigmente derart zu modifizieren, welche sich leicht dispergieren lassen und zugleich eine hohe Farbstärke aufweisen, wobei deren im Vergleich zur Herstellung der entsprechenden Pigmente kein zusätzlicher Mahlschritt benötigt.

In der Literatur ist es bekannt, dass Netz- und Dispergiermittel auf verschiedene Weise klassifiziert werden. Deren Zuordnungen werden nach dem chemischen Aufbau definiert oder in ionische und nichtionische Produkte aufgeteilt. Andere Einteilungen richten sich nach dem Einsatzgebiet (wässrig und nichtwässrig) oder nach der Pigmentgruppe (organisch und anorganisch). Auch eine Trennung nach der Molekülgröße ist denkbar (niedermolekular oder hochmolekular). Auf Grund der Komplexität amphiphiler Substanzen, die zudem auch noch einzigartige Funktionen aufweisen, ist es nicht einfach, eine simple Modellvorstellung zu entwickeln.

Es wurde festgestellt, dass die Modifizierung der organischen Pigmente mit verbesserten Farbeigenschaften mit einigen Netz- und Dispergiermitteln funktionieren, mit anderen wiederum nicht, obwohl deren chemische Struktur sich ähnelten.

Es war daher auch Aufgabe der Erfindung, Netz- und Dispergiermittel derart zu bestimmen bzw. einzugrenzen, mit denen die Modifizierung der organischen Pigmente gewährleistet werden konnte.

Diese Aufgabe konnte durch modifizierte organische Pigmente gemäß der vorliegenden Erfindung gelöst werden.

Die erfindungsgemäßen modifizierten organischen Pigmente sind erhältlich durch Umsetzung der Pigmente während der Pigmentsynthese mit mindestens einer grenzflächenaktiven Verbindung, wobei die grenzflächenaktiven Verbindungen derart ausgewählt sind, dass sie innerhalb eines dreidimensionalen Hansen-Raumes liegen, wobei der Hansen-Raum durch drei Koordinaten, die sog. Hansen-Löslichkeitsparameter (Hansen Solubility Parameter = HSP), D = 18,21, P = 8,44, H = 13,16 mit einem Radius von 6,7 Einheiten um den Mittelpunkt, bevorzugt D = 18,21, P = 8,44, H =1 3,16 mit einem Radius von 5,5 Einheiten um den Mittelpunkt, besonders bevorzugt D = 18,21, P = 8,44, H = 13,16 mit einem Radius von 5,0 Einheiten um den Mittelpunkt, mithilfe der Software HSPiP, Version 5.0.0.4 bestimmt wird.

Der Radius (Abstand) zum Mittelpunkt des Hansen-Raums kann mittels der Vektorgeometrie errechnet werden. Die Vektorgeometrie (auch "analytische Geometrie" genannt) befasst sich mit linearen Berechnungen in Räumen und ist dem Fachmann bekannt.

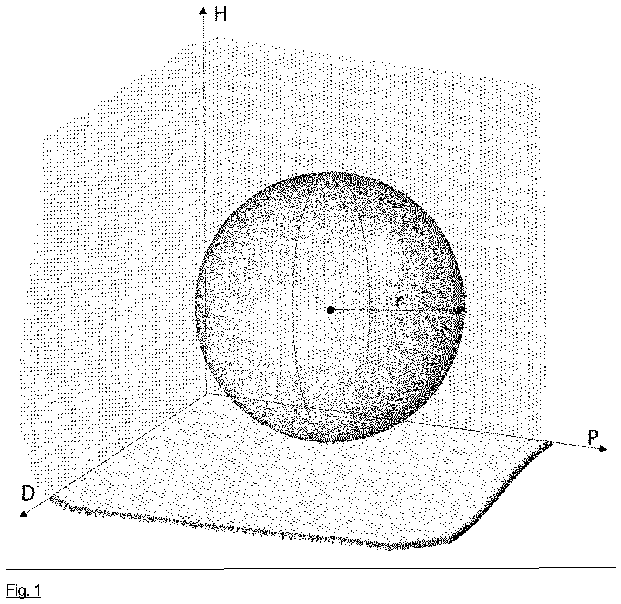

Fig. 1 zeigt eine schematische Darstellung des erfindungsgemäßen Hansen-Raums auf.

Es konnte festgestellt werden, dass nur die innerhalb des erfindungsgemäßen dreidimensionalen Hansen-Raumes liegenden grenzflächenaktiven Verbindungen, für die Umsetzung geeignet sind. Pigmente mit grenzflächenaktiven Verbindungen außerhalb des erfindungsgemäßen Hansen-Raumes weisen keine bessere Farbeigenschaft auf.

Die Definition der Löslichkeitsparameter gemäß Hansen ist dem Fachmann bekannt und wurde in seiner Abhandlung, "The Three Deminsional Solubility Parameter and Solvent Diffusion Coefficient, Their Importance In Surface Coating Formulation", von Charles M. Hansen Danish Technical Press, Copenhagen, 1967, erläutert.

Die Hansen-Löslichkeitsparameter (HSP) wurden entwickelt, um zu bestimmen, ob sich ein Material in einem anderen auflösen lässt und somit eine homogene Lösung bildet. Sie können auch dazu dienen, die Inkompatibilität zweier Materialien zu bestimmen.

Hansen-Löslichkeitsparameter (HSP) bestehen aus einem Satz von drei Werten: einer Dispersionskomponente (δD), einer polaren Komponente (δP) und einer Wasserstoffbrückenbindungskomponente (δH). Diese drei Komponenten beschreiben die Kräfte, die zur kohäsiven Energiedichte einer chemischen Verbindung beitragen, und ermöglichen eine qualitative Beschreibung über quantitative Einzelheiten von "hydrophob", "polar" oder "lipophil" hinaus.

Durch Visualisierung dieser drei Komponenten als Koordinaten in einem 3D-Diagramm mithilfe der Software HSPiP, version 5.0.0.4, programmiert und vertrieben von Prof. Steven J Abbott, Hiroshi Yamamoto und Charles Hansen (über www.hansen-solubility-com), lässt sich das Lösungsvermögen der Materialien bestimmen und somit auch den Hansen-Raum mit seinen drei Hansen-Löslichkeitsparameter errechnen. Dabei stellt der Mittelpunkt des Hansen-Raumes das optimale Lösungsvermögen aller Materialien dar. Der Radius beschreibt die Grenze des Hansen-Raumes.

Für die Bestimmung des Hansen-Raumes der grenzflächenaktiven Verbindungen wurde das HSP-zertifizierte Institut "VLCI- Van Loon Chemical Innovations BV, Sience Park 408, 1098 XH Amsterdam, Niederlande" beauftragt. Deren Messungen wurden mittels eines automatisierten Verfahrens (Formax High-Throughput Formulation System von Fa. Chemspeed) mit niedrigen Fehlergrenzen durchgeführt.

Die grenzflächenaktiven Verbindungen wurden jeweils in 32 Lösungsmitteln für 20 Minuten bei 800 rpm bei 20°C gerührt. Die Konzentration betrug 0,25 g /5ml Lösungsmittel. Diese Prozedur wurde mittels des Formax High-Throughput Formulation Systems vollautomatisch durchgeführt. Anschließend wurde das Lösungsvermögen der grenzflächenaktiven Verbindungen in den jeweiligen Lösungsmitteln bestimmt.

Folgende Lösungsmittel wurden eingesetzt:
Acetonitril, 1-Bromnapfthalin, n-Butylacetat, γ-Butyrolacton, Cyclohexanon, Decamethylcyclopentasiloxan, Dimethylformamid (DMF), Dimethyl Sulfoxid (DMSO), 1,4-Dioxan, Glycerincarbonat, n-Hexan, Methyl Ethyl Keton (MEK), N-Methyl Formamid, N-Methyl-2-Pyrrolidon (NMP), 2-Phenoxy Ethanol, 2-Propanol, Propylencarbonate, Propylenglycol, Propylenglycol Monomethyl Ether, Tetrahydrofuran (THF), Toluol, Benzoesäurebenzylester, Dimethyl Isosorbid, Hexamethyldisiloxan, Di(ethylen glycol) hexylether, 1,3-Dioxolan, Ameisensäureethylester, 1-Octanol, 1-Methoxy-2-propylacetat, Aceton, Essigsäureethylester, Ethylenglycolmonobutylether.

Das Lösungsvermögen wird anhand der folgenden sechsstufigen Skala bewertet:

**Tabelle 1:**

| **Löslichkeit Skala** | **Bodensatz** | **Trübung** |
|---|---|---|
| 1 | nein | nein |
| 2 | nein | schwach |
| 3 | nein | stark |
| 4 | eine Spur | stark |
| 5 | mittelmäßig | schwach |
| 6 | vollständig | nein |

Die Auswertung des Lösungsvermögens der grenzflächenaktiven Verbindungen in dem jeweiligen Lösungsmittel wird in die HSPiP software, version 5.0.0.4, programmiert und vertrieben von Prof. Steven J Abbott, Hiroshi Yamamoto und Charles Hansen (erhältlich überwww.hansen-solubility-com), eingegeben. Sie errechnet und bestimmt anhand dieser Daten den Hansen-Raum.

Bevorzugt handelt es sich bei den grenzflächenaktiven Verbindungen um chemische amphiphile, ionische, nichtionische, nieder- und/oder hochmolekulare Verbindungen, die sich im oben aufgeführten erfindungsgemäßen Hansen-Raum befinden.

Bevorzugt handelt es sich bei den grenzflächenaktiven Verbindungen um polyethermodifizierte Fettsäuren, polyethermodifizierte Fettsäureamidamine, polyethermodifierte Amin Derivate, Jeffamin Derivate, polyethermodifizierte Öle und Fette und deren Derivate.

Bevorzugt handelt es sich bei den grenzflächenaktiven Verbindungen um phosporylierte Polyether-Derivate, insbesondere auf Fettalkohol Basis.

Bevorzugt handelt es sich bei den grenzflächenaktiven Verbindungen um Maleinatharze und polyethermodifizierte Styrol Maleinsäure Copolymere. Bei Maleinatharzen handelt es sich um die Diels-Alder-Addukte von Kolophonium mit Malein- bzw. Fumarsäure, welche noch ganz oder teilweise mit mehrwertigen Alkoholen verestert werden können. So können eine sehr große Bandbreite an Hartharzen mit unterschiedlichen Schmelzpunkten, Funktionalitäten sowie dadurch bedingten Löslichkeiten hergestellt werden.

Bevorzugt handelt es sich bei den grenzflächenaktiven Verbindungen um Polyester, die mit pigmentaffinen Gruppen modifiziert sind.

Bevorzugt handelt es sich bei den grenzflächenaktiven Verbindungen um nichtionische ethoxylierte Zuckertenside.

Besonders bevorzugt handelt es sich dabei um Polyoxyethylen-sorbitan-monolaurat, Polyoxyethylen-sorbitan-monopalmitat, Polyoxyethylen-sorbitan-monostearat, Polyoxyethylen-sorbitan-monooleat, Polyoxyethylen-sorbitan-tristearat,

Es können bevorzugte handelsübliche Fettalkoholethoxylate, ausgewählt aus der Gruppe der Polyalkylenglycolether.

Bevorzugt weisen die grenzflächenaktiven Verbindungen eine oder mehrere Funktionalitäten auf, die eine Affinität für die Pigmentoberfläche aufweisen.

Geeignete grenzflächenaktive Verbindungen mit den erforderlichen Hansen-Parametern sind die von Evonik Industries AG erhältlichen Produkte, wie zum Beispiel TEGO^{®} Dispers 652, TEGO^{®} Dispers 655, TEGO^{®} Dispers 673, TEGO^{®} Dispers 740W, TEGO^{®} Dispers 750.

Auch das Produkt Erkamar 3260 der Fa. Robert Kraemer GmbH & Co. KG ist geeignet.

Bevorzugt sind die organischen Pigmente ausgewählt aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phthalocyaninpigmente.

Naphthol AS-Pigmente werden konventionell in Batch-Verfahren hergestellt. Für die Ausbeute, koloristische Eigenschaft und Qualitätskonstanz ist es erforderlich, dass die Verfahrensparameter, wie Temperatur, Zeit, Durchmischung und Farbmittelkonzentration und die Suspensionskonzentration, eingehalten und kontrolliert werden. Auch kommt es beim scale-up vom Labormaßstab in den großtechnischen Maßstab bei Batch-Verfahren zu weiteren Schwierigkeiten, da die Kessel- und Rührergeometrien oder Wärmeübergänge großen Einfluss auf die Primärkomgröße, Komgrößenverteilung haben.

Naphthol AS-Pigmente sind von besonderem technischen Interesse, da diese meist hohe Farbstärken erreichen und den Magenta-Bereich des Prozeßfarbensets abdecken. Weiterhin weisen sie eine gute Lichtechtheit auf.

DE 102004019560 A1, DE 602006017431 D1 beschreiben die Herstellung von Naphthol AS-Pigmente und deren Verwendung in Dispersionen.

Vorzugsweise weisen die modifizierten organischen Pigmente 2 bis 70 Gew.-%, bevorzugt 5 bis 50 Gew.-%, besonders bevorzugt 15 bis 35 Gew.-% grenzflächenaktive Verbindungen bezogen auf 100 Gew.-% der modifizierten organischen Pigmente auf.

Ein weiterer Gegenstand der Erfindung ist das Verfahren zur Herstellung der modifizierten organischen Pigmente, wobei die im erfindungsgemäßen Hansen-Raum liegenden grenzflächenaktiven Verbindungen während der Herstellung der organischen Pigmente zugegeben werden. Die Zugabe der grenzflächenaktiven Verbindungen kann zu einem beliebigen Zeitpunkt während der Herstellung der organischen Pigmente erfolgen.

Das herkömmliche Herstellungsverfahren von organischen Pigmenten gliedert sich in folgenden Teilschritten auf:
1. Synthese der Rohpigmente
2. Aufarbeitung der Rohpigmente durch Waschen und Filtration
3. Trocknung der Rohpigmente

Vorzugsweise findet die Zugabe der grenzflächenaktiven Verbindungen während der Synthese der Rohpigmente, nach der Synthese der Rohpigmente oder nach der Aufarbeitung der Rohpigmente statt. Auf jeden Fall erfolgt vorzugsweise die Modifizierung vor der Trocknung der Rohpigmente.

Mit dem erfindungsgemäßen Verfahren konnte die Herstellung von organischen Pigmenten mit enger Partikelgrößenverteilung ermöglicht werden. Des Weiteren weisen die modifizierten organischen Pigmente verbesserte Dispergiereigenschaften auf. Es wird vermutet, dass die grenzflächenaktiven Verbindungen aufgrund von Van-der-Waals Kräften in Wechselwirkung mit der Oberfläche der Pigmente stehen. Die Wechselwirkung ist derart stabil, dass eine Agglomeration der Pigmente reduziert bzw. vermieden werden konnte.

Überraschend kann auch mit dem erfindungsgemäßen Verfahren die Herstellung von definierter Partikelgröße der Pigmente durch den Zeitpunkt der Zugabe der grenzflächenaktiven Verbindungen bestimmt werden. Zusätzliche Mahlvorgänge der Rohpigmente, welche üblicherweise bei der Herstellung von Beschichtungssysteme aller Art getätigt werden müssen, müssen nicht mehr durchgeführt werden.

Mit dem erfindungsgemäßen Verfahren ist es nun möglich, modifizierte Pigmente mit verbesserter Dispergiereigenschaft ohne kostspielige und umfangreiche Umbaumaßnahme an den bestehenden Anlagen herzustellen.

Vorzugsweise wird die Zugabe der grenzflächenaktiven Verbindungen in wässriger Lösung, bevorzugt in alkalischer Lösung bei einem pH-Wert von 8 bis 9, durchgeführt.

Bevorzugt beträgt bei der Herstellung von Naphthol-AS Pigmente mit 4-Aminobenzamid das Gewichtsverhältnis der grenzflächenaktiven Verbindungen zum 4-Aminobenzamid von 0,3 : 1 bis 10 : 1, bevorzugt 0,5 : 1 bis 5 : 1, besonders bevorzugt 0,35 : 1 bis 3,5 : 1.

Auch die Verwendung der erfindungsgemäßen modifizierten organischen Pigmente zur Herstellung von Farben, Lacken, Druckfarben, Beschichtungsstoffen, Fußbodenbeschichtungen, Vergussmassen, Spachtelmassen ist Gegenstand der Erfindung.

Geeignete Lacksysteme, in die die erfindungsgemäßen modifizierten organischen Pigmente eingearbeitet werden können, sind jegliche lösungsmittelhaltig oder wässrig formulierte Einkomponenten- oder Zweikomponenten-Lacksysteme (1K bzw. 2K), aber auch lösungsmittelfreie Systeme.

Beispiele für 1K Lacksysteme sind solche basierend auf Alkyd-, Acrylat-, Styrolacrylat-, Epoxy-, Polyvinylacetat-, Polyester- oder Polyurethanbindemitteln. Dabei ist jede Art der Aushärtung möglich, beispielsweise oxidativ trocknend, physikalisch trocknend, selbstvemetzend; UV- oder Elektronenstrahl-härtend oder vernetzend durch Einbrennen.

2K Lacksysteme vernetzen durch die Zugabe mindestens einer Härterkomponente. Häufig werden jedoch Vemetzungsmechanismen kombiniert, um eine bessere Haltbarkeit zu erzielen. Dabei sind alle Kombinationen von Härtungsmechanismen zulässig. Beispielsweise können als 2K Systeme Hydroxylgruppen-haltige Polyester oder Polyacrylatharze mit Isocyanaten oder blockierten Isocyanaten oder Melaminharzen zur Vernetzung gebracht werden. Femer seien Epoxysysteme genannt, bei denen das Epoxybindemittel mit einem Aminhärter zur Reaktion gebracht wird.

Die erfindungsgemäßen modifizierten organischen Pigmente können in Pigmentpasten, Beschichtungsstoffen, Druckfarben und/oder Drucklacken in einer Konzentration von 0,01 bis 90,0 Gew.-%, vorzugsweise von 0,5 bis 35 Gew.-%, und besonders bevorzugt von 1 bis 25 Gew.-% bezogen auf das Anwendungsmedium eingesetzt werden.

Die erfindungsgemäßen Gegenstände werden nachfolgend beispielhaft beschrieben, ohne dass die Erfindung auf diese beispielhaften Ausführungsformen beschränkt sein soll.

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

### Applikation

Die abgetönten Lacke werden mit einer Spiralrakel (100 µm, Fa. TQC GmbH) auf Prüfkarten (z.B. Fa. Leneta, Opacity charts, Form 2A) appliziert.

Um die Leistungsfähigkeit der Feststoffe bezüglich Farbstärkenentwicklung und einer einfachen Dispergierung zu bewerten, wurde die erhaltende Farbstärke nach 24h Trocknung bei 50°C einer Farbmessung unterzogen.

### Farbmessung

Die Farbmessung der Lackoberflächen erfolgte mit einem Gerät der Firma X-Rite (Typ: X-Rite SP 60). Von allen Proben wurden die sogenannten L*a*b*-Werte gemäß des CIE-Lab-Systems (CIE = Commission Internationale de l'Eclairage) bestimmt. Das CIE-Lab-System ist als ein dreidimensionales System zur quantitativen Beschreibung der Farborte nützlich. Darin sind auf einer Achse die Farben Grün (negative a-Werte) und Rot (positive a*-Werte) aufgetragen, auf der dazu im rechten Winkel angeordneten Achse die Farben Blau (negative b*-Werte) und Gelb (positive b*-Werte). Der Wert C* setzt sich aus a* und b* wie folgt zusammen: C* = (a*²+b*²)^{0,5} und wird zur Beschreibung von violetten Farborten verwandt. Die beiden Achsen kreuzen sich im Unbuntpunkt. Die vertikale Achse (Unbuntachse) ist maßgebend für die Helligkeit von Weiß (L = 100) bis Schwarz (L = 0). Mit dem CIE-Lab-System können nicht nur Farborte, sondern auch Farbabstände durch die Angabe der drei Koordinaten beschrieben werden.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Verwendete Chemikalien und Materialien

**Tabelle 2:**

| | **Grenzflächenaktive Verbindungen** | **Firma** | **Chemische Bezeichnung** |
|---|---|---|---|
| M1 | TEGO^{®} Dispers 652 | Evonik Industries AG | Konzentrat eines Fettsäurederivates |
| M2 | TEGO^{®} Dispers 655 | Evonik Industries AG | modifizierter Polyether mit pigmentaffinen Gruppen |
| M3 | TEGO^{®} Dispers 673 | Evonik Industries AG | hochmolekulares Polymer |
| M4 | TEGO^{®} Dispers 740W | Evonik Industries AG | nicht-ionisches, modifiziertes Fettsäurederivat, aromaten-, amin- und alkylphenolethoxylatfrei |
| M5 | TEGO^{®} Dispers 750 | Evonik Industries AG | wässrige Lösung eines organisch modifizierten Polymers mit pigmentaffinen Gruppen |
| M6 | Erkamar 3260 | Robert Kraemer GmbH & Co. KG | Maleinatharz |
| VM | TEGO^{®} Dispers 685 | Evonik Industries AG | hochmolekulares Polymer |

**Tabelle 3: HSP Werte und Abstand zum Mittelpunkt des Hansen-Raums**

| **Grenzflächenaktive Verbindungen** | **dD** | **dP** | **dH** | **Abstand zum Mittelpunkt des Hansen-Raums** |
|---|---|---|---|---|
| M1 | 16,55 | 4,4 | 8,55 | 6,35 |
| M2 | 16,98 | 14,62 | 11,3 | 6,57 |
| M3 | 19,76 | 11,12 | 13,02 | 5,00 |
| M4 | 17,15 | 10,97 | 10,76 | 3,64 |
| M5 | 16,14 | 12,89 | 13,64 | 4,93 |
| M6 | 16,71 | 8,04 | 9,95 | 3,57 |
| VM | 17,07 | 7,77 | 6,58 | 6,71 |

Tabelle 3 führt die Koordinaten der erfindungsgemäßen grenzflächenaktive Verbindungen M1 - M6 mit ihrem jeweiligen Abstand zum Mittelpunkt des definierten Hansen-Raums (D=18,21, P=8,44, H=13,16 mit einem Radius von 6,7 Einheiten um den Mittelpunkt) auf. M1 - M6 liegen innerhalb des Hansen-Raums.

Tabelle 3 zeigt auch die Koordinaten des Vergleichsbeispiels VM mit einem Mittelpunkt-Abstand außerhalb des Hansen-Raums.

Der Abstand zum Mittelpunkt des Hansen-Raums kann mittels der Vektorgeometrie errechnet werden.

Die Vektorgeometrie (auch "analytische Geometrie" genannt) befasst sich mit linearen Berechnungen in Räumen und ist dem Fachmann bekannt.

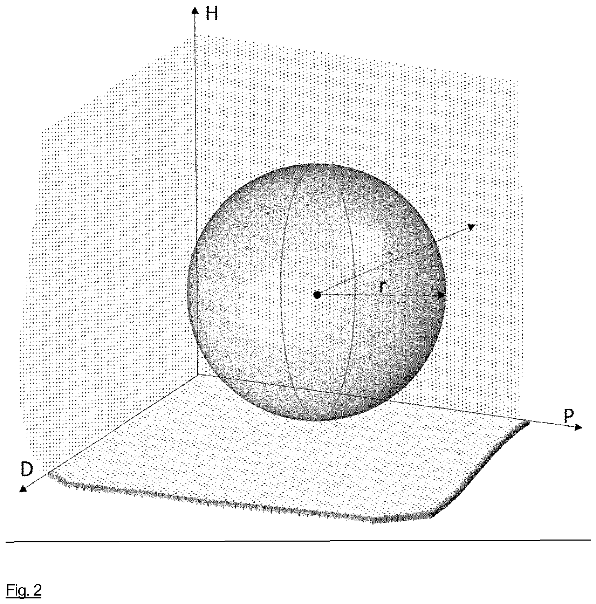

Fig.2 zeigt schematisch eine Verbindung, die sich außerhalb des Hansen-Raums befindet (Pfeil ohne Beschriftung). Der Pfeil mit Beschriftung "r" zeigt den Radius des Hansen-Raums zum Mittelpunkt.

### 1. Herstellung von erfindungsgemäßen modifizierte Pigmente

Es wurden zwei erfindungsgemäße organische modifizierte rote Naphthol-AS Pigmente (PR266 und PR170) nach drei erfindungsgemäßen Verfahren hergestellt. Die Herstellung wurde in Anlehnung an das Organikum - Organisch-chemisches Grundpraktikum, VEB Deutscher Verlag der Wissenschaften, Berlin 1990, Seite 300, 370, 532, 547ff, 549 durchgeführt.

Die erfindungsgemäßen Verfahren unterscheiden sich im Zeitpunkt der Zugabe der erfindungsgemäßen grenzflächenaktiven Verbindungen.

### 1.1 Herstellungsverfahren 1 (HV1):

Herstellung eines modifizierten organischen Pigments - Zugabe der erfindungsgemäßen grenzflächenaktiven Verbindungen nach der Synthese

Zu einer Lösung bestehend aus 46,6 g 4-Aminobenzamid, 500 g VE Wasser, 86,6 g konz. HCl und 50 g Natriumacetat wird unter Rühren bei 5°C über einen Zeitraum von 120 min eine Lösung aus 100 g 2-Methoxy-3-hydroxy-2-naphthanilid (für PR266) bzw. 104,78 g N-(2-Ethoxyphenyl)-3-hydroxy-2-naphthalenecarboxamid (für PR170), 150 g NaOH (10%ig), 300 g Ethanol, 25 g Natriumnitrit und 75 g VE-Wasser getropft.

Die dabei entstehende Suspension wird 60 min bei 70°C nachgerührt. Mit 186,4 g NaOH (10%ig) wird auf pH >7 eingestellt. Dem Gemisch wird die erfindungsgemäße grenzflächenaktive Verbindung gemäß in Tabelle 4 und Tabelle 5 angegebenen Gewichtsverhältnis zugegeben. Nach 30 Minuten Homogenisierung wird mit HCl 10%ig auf pH 5 angesäuert und das Pigment abfiltriert, gewaschen und im Umluftofen bei 70°C getrocknet.

Das erfindungsgemäße modifizierte Pigment wird in einer Messermühle (Retsch Grindomix GM200) für 10 Sekunden bei 10.000 rpm grob zerkleinert.

### 1.2 Herstellungsverfahren 2 (HV2):

Herstellung eines modifizierten organischen Pigments - Zugabe der erfindungsgemäßen grenzflächenaktiven Verbindungen während der Synthese

Die erfindungsgemäßen grenzflächenaktiven Verbindungen mit dem in Tabelle 4 bzw. 5 angegebenen Gewichtsverhältnis wurden zu einer Lösung bestehend aus 33,33 g 2-Methoxy-3-hydroxy-2-naphthanilid (für PR266) bzw. 34,93 g N-(2-Ethoxyphenyl)-3-hydroxy-2-naphthalenecarboxamid (für PR170), 50 g NaOH (10%ig), 100 g Ethanol, 8,33g Natriumnitrit und 25 g VE-Wasser gegeben. Dieses Gemisch wird bei 5°C über einen Zeitraum von 120 min zu einer Lösung bestehend aus 15,47 g 4-Aminobenzamid, 166,67 g VE Wasser, 28,87 g konz. HCl und 16,67 g Natriumacetat getropft.

Die dabei entstehende Suspension wird 60 min bei 70°C nachgerührt. Es wird mit 62,13 g NaOH 10%ig alkalisch gestellt.

Nach 30 Minuten Homogenisierung wird mit HCl 10%ig angesäuert und das Pigment abfiltriert, gewaschen und im Umluftofen bei 70°C getrocknet.

Das erfindungsgemäße modifizierte Pigment wird in einer Messermühle (Retsch Grindomix GM200) für 10 Sekunden bei 10000rpm grob zerkleinert.

### 1.3 Herstellungsverfahren 3 (HV3):

Herstellung eines modifizierten organischen Pigments - Zugabe der erfindungsgemäßen grenzflächenaktiven Verbindungen zum Filterkuchen

Zu einer Lösung bestehend aus 46,6 g 4-Aminobenzamid, 500 g VE Wasser, 86,6 g konz. HCl und 50 g Natriumacetat wird unter Rühren bei 5°C über einen Zeitraum von 120 min eine Lösung aus 100 g 2-Methoxy-3-hydroxy-2-naphthanilid (für PR266) bzw. 104,78 g N-(2-Ethoxyphenyl)-3-hydroxy-2-naphthalenecarboxamid (für PR170), 150g NaOH 10%ig, 300g Ethanol, 25g Natriumnitrit und 75g VE-Wasser getropft.

Die dabei entstehende Suspension wird 60min bei 70°C nachgerührt.

Danach wird das Pigment abfiltriert und gewaschen. Dem Filterkuchen wird die erfindungsgemäße grenzflächenaktive Verbindung gemäß dem Gewichtsverhältnis laut Tabelle 4 bzw. 5 zugegeben und 30 Minuten homogenisiert. Es wird mit HCl 10%ig auf einen pH-Wert von 5 angesäuert und danach im Umluftofen bei 70°C getrocknet.

Das erfindungsgemäße modifizierte Pigment wird in einer Messermühle (Retsch Grindomix GM200) für 10 Sekunden bei 10000rpm grob zerkleinert

**Tabelle 4: Für PR266**

| Modifizierte Pigmente | Gewichtsverhältnis grenzflächenaktive Verbindung zu 4-Aminobenzamid | grenzflächen aktive Verbindung | HV1 | HV2 | HV3 | Theoretischer Gewichtsanteil an grenzflächenaktive Verbindung im Pigment |
|---|---|---|---|---|---|---|
| P1 | 1,35:1 | M1 | x | | | 30 |
| P2 | 1,35:1 | M2 | | x | | 30 |
| P3 | 3,15:1 | M3 | x | | | 50 |
| P4 | 3,15:1 | M4 | | | x | 50 |
| P5 | 1,31:1 | M5 | | | x | 14,3 |
| P6 | 0,35:1 | M6 | | | x | 10 |
| VP1 | 1,35:1 | VM | | x | | 30, nicht abfiltrierbar |
| VP2 | entfällt | ohne | x | | | entfällt |

**Tabelle 5: Für PR170**

| Modifizierte Pigmente | Gewichtsverhältnis grenzflächenaktive Verbindung zu 4-Aminobenzamid | grenzflächen aktive Verbindung | HV1 | HV2 | HV3 | Theoretische Gewichtsanteil an grenzflächenaktive Verbindung im Pigment |
|---|---|---|---|---|---|---|
| P10 | 1,43:1 | M1 | | | x | 30 |
| P11 | 1,43:1 | M2 | x | | | 30 |
| P12 | 3,33:1 | M3 | | x | | 50 |
| P13 | 3,33:1 | M4 | x | | | 50 |
| P14 | 1,39:1 | M5 | | x | | 14,3 |
| P15 | 0,37:1 | M6 | | | x | 10 |
| VP3 | 1,43:1 | VM | x | | | 30, nicht abfiltrierbar |
| VP4 | entfällt | ohne | x | | | entfällt |

Vergleichspigmente VP2 und VP4 wurden ohne Zugabe von grenzflächenaktiver Verbindung hergestellt.

Vergleichspigmente VP1 und VP 3 wurden analog der in der Tabelle 4 und 5 angegebenen Herstellungsverfahren mit Zugabe von VM (grenzflächenaktive Verbindung außerhalb des Hansen-Raums) durchgeführt. Vergleichspigmente VP1 und VP3 konnten nicht abfiltriert werden.

### 2. Anwendungstechnische Beispiele

Zur Überprüfung der Einsetzbarkeit der erfindungsgemäßen modifizierten Pigmente werden diese in verschiedene Lacksysteme unter niedrigerer und hoher Scherenergie verwendet und auf ihre Farbstärkeentwicklung und Dispergierbarkeit überprüft.

Die Pigmente wurden in einem wasserverdünnbaren Weißlack, in einem Konzentrat und im 2K-PU-Lack eingesetzt. Die Lacke werden anhand der Farbstärke miteinander verglichen.

### 2.1 Herstellung eines wasserverdünnbaren Weißlacks

Zunächst wird ein wasserverdünnbarer Weißlack gemäß der Beschreibung im Lehrbuch der Lacktechnologie 4, überarbeitete Auflage der Autoren Brock, Groeteklaes und Mischke S.222 ff und gemäß Tabelle 6 hergestellt. Anschließend werden die erfindungsgemäßen Pigmente und Vergleichspigmente jeweils in dem Weißlack mit niedrigen Scherkräften und mit hohen Scherkräften eingearbeitet.
a) Niedrige Scherenergien wurden wie folgt eingebracht:
   100g des wasserverdünnbaren Weißlackes werden mit 2,5 g erfindungsgemäßen Pigmenten bzw. Vergleichspigmenten versetzt und für 5 Minuten mit einer Schergeschwindigkeit von 10m/s mittels eines DISPERMAT CV der Firma Getzmann, eingerührt.
b) Hohe Scherenergien wurden wie folgt eingebracht:
   100 g des wasserverdünnbaren Weißlackes werden mit 2,5 g erfindungsgemäßen Pigmenten bzw. Vergleichspigmenten versetzt und mit einem Universalrüttler (Hausschild Engineering, DAC 150 Dual Asymmetric Centrifuge) für 120 min mit 2mm Glasperlen in 250ml Schraubdeckelglasflaschen dispergiert. Die Glasperlen werden anschließend entfernt.

**Tabelle 6: Wasserverdünnbarer Weißlack**

| **Rohstoff** | **Hersteller bzw. CAS-Nr** | **Einwaage [g]** |
|---|---|---|
| Propylen glykol | 25322-69-4 | 11,3 |
| Wasser | Stadtwerke Essen AG | 15 |
| 2-amino-2-methyl-1-propanol | 124-68-5 | 1 |
| Tego Foamex 830 | Evonik Industries AG | 1,2 |
| Tego Dispers 750W | Evonik Industries AG | 14,5 |
| Titandioxid Kronos 2310 | KRONOS TITAN GmbH | 107 |
| Glasperlen 2mm Durchmesser | PAS Jablonec a.s | 175 |
| | | |
| Alberdingk AC2742, Acrylat Dispersion | Alberdingk Boley GmbH | 240 |
| Butylglykol | 111-76-2 | 14,5 |
| 3-Methoxy-1-butanol | 123-51-3 | 15,5 |
| Wasser | Stadtwerke Essen AG | 37 |
| Tego Viscoplus 3030 | Evonik Industries AG | 9 |
| | | 641 |

Die Zusammensetzung wurde mit einer Spiralrakel (100 µm) auf Prüfkarten (Lenetakarten) appliziert und für die Farbmessung bereitgestellt.

Tabelle 7 zeigt die gemessenen Farbwerte auf. Gewünscht ist hier eine möglichst geringe Differenz der Farbstärke F* zwischen den Lacken mit niedriger Scherenergie und denen mit hoher Scherenergie. Es zeigt sich, dass die erfindungsgemäßen Lacke (L1, L3, L5) mit den erfindungsgemäßen Pigmente (P1, P3, P5) eine geringere Differenz aufweisen als die Vergleichslacke (VL2) mit den Vergleichspigmenten (VP 2) ist.

Die Differenz gibt eine Aussage über die Dispergierbarkeit der Pigmente an. Es hat sich gezeigt, dass die erfindungsgemäßen Pigmente keinen hohen Energieeintrag benötigen, damit der Lack eine gute bis sehr gute Farbstärke bekommt.

**Tabelle 7: Farbmetrische Messwerte im wasserverdünnbaren Weißlack**

| **Lack** | **Pigment** | **Scherenergien** | **L*** | **a*** | **b*** | **Y** | **F** | **F*** |
|---|---|---|---|---|---|---|---|---|
| VL2 | VP2 | hoch | 77,08 | 18,81 | 1,54 | 51,67 | 22,61 | 100 |
| VL2* | VP2 | niedrig | 84,49 | 6,95 | 4,92 | 65,01 | 9,41 | 41,6 |
| | | | | | | | | |
| L1 | P1 | hoch | 73,75 | 26,41 | 1,53 | 46,32 | 31,11 | 100 |
| L1* | P1 | niedrig | 77,92 | 19,07 | 2,15 | 53,08 | 20,74 | 66,7 |
| | | | | | | | | |
| L3 | P3 | hoch | 76,13 | 23,42 | 2,47 | 50,10 | 24,85 | 100 |
| L3* | P3 | niedrig | 77,46 | 20,07 | 2,44 | 52,30 | 21,75 | 87,5 |
| | | | | | | | | |
| L5 | P5 | hoch | 72,44 | 26,9 | 0,32 | 44,32 | 34,98 | 100 |
| L5* | P5 | niedrig | 72,94 | 24,74 | -0,02 | 45,07 | 33,47 | 95,7 |

### 2.2 Herstellung eines Konzentrats

Typischerweise kann es auch vorkommen, dass die Pigmente zu einem Konzentrat verarbeitet werden, um durch Bevorratung verschiedener Farbtöne flexibel und variabel produzieren zu können. Die erfindungsgemäßen Pigmente und Vergleichspigmente werden daher als Konzentraten mit niedrigen und hohen Scherkräften getestet:
25 g erfindungsgemäßer Pigment bzw. Vergleichspigment und 75 g Wasser für 10 Minuten mit einer Schergeschwindigkeit von 3m/s mittels eines DISPERMAT CV der Firma Getzmann, eingerührt.

### aa) Herstellung von Konzentraten mit niedrigen Scherkräften:

10 g der entstandenen Dispersion werden mit 100 g des wasserverdünnbaren Weißlackes versetzt und für 2 Minuten mit einer Schergeschwindigkeit von 3m/s mittels eines DISPERMAT CV der Firma Getzmann, eingerührt.

### bb) Herstellung von Konzentraten mit hohen Scherkräften:

10 g der entstandenen Dispersion werden mit 100 g des wasserverdünnbaren Weißlackes versetzt und mit einem Universalrüttler (Hausschild Engineering, DAC 150 Dual Asymmetric Centrifuge) für 120 min mit 2mm Glasperlen in 250ml Schraubdeckelglasflaschen dispergiert. Die Glasperlen werden anschließend entfernt.

Die hergestellten Zusammensetzungen werden wie im Beispiel des wasserverdünnbaren Weißlack appliziert und farbmetrisch ausgewertet.

**Tabelle 8: Farbmetrische Messwerte des Konzentrats**

| **Konzentrat** | **Feststoff** | **Scherenergien** | **L*** | **a*** | **b*** | **Y** | **F** | **F*** |
|---|---|---|---|---|---|---|---|---|
| VK4 | VP4 | hoch | 71,19 | 26,98 | 0 | 42,47 | 38,98 | 100 |
| VK4* | VP4 | niedrig | 85,56 | 7,11 | 4,99 | 67,11 | 8,06 | 20,68 |
| | | | | | | | | |
| K10 | P10 | hoch | 72 | 26,87 | 0,02 | 43,66 | 36,35 | 100 |
| K10* | P10 | niedrig | 71,02 | 25,57 | 0,07 | 42,22 | 39,55 | 108,78 |
| | | | | | | | | |
| K14 | P14 | hoch | 72,69 | 26,33 | 0,05 | 44,69 | 34,22 | 100 |
| K14* | P14 | niedrig | 72,94 | 24,74 | -0,02 | 45,07 | 33,47 | 97,80 |
| | | | | | | | | |
| K16 | P15 | hoch | 71,99 | 26,67 | -0,02 | 43,64 | 36,38 | 100 |
| K16* | P15 | niedrig | 70,57 | 26,69 | -0,09 | 41,57 | 41,08 | 112,89 |

Es zeigt sich, dass die erfindungsgemäßen Konzentrate (K10, K14, K16) mit den erfindungsgemäßen Pigmenten (P10, P14, P15)bei Einsatz niedriger Scherenergien eine erhöhte Farbstärke F* gegenüber dem Vergleichskonzentrat (VP4) mit dem Vergleichspigment (VP4) zeigen.

### 2.3 Herstellung von Zweikomponenten - Polyurethanlack (2K-PU-Lack)

Es wurde ein Zweikomponenten-Polyurethanlack gemäß Tabelle 9 hergestellt.

**Tabelle 9: Weißer, Zweikomponenten-Polyurethanlack**

| | **Rohstoffe** | **Einwaage in g** |
|---|---|---|
| 1 | Bindemittel Desmophen^{®} AVPLS 2350 (Fa. Bayer AG) | 462,0 |
| 2 | Titandioxid KRONOS^{®}2310 (Fa. KRONOS Int.) | 369,6 |
| 3 | Xylol | 25,0 |
| 4 | Methoxypropylacetat (MPA) | 25,0 |
| 5 | Butylacetat (BuAc) | 25,0 |
| | Vorgenannte fünf Komponenten werden in einem 2 I Dispergiertopf zusammen mit 700g Perlen für 2 Stunden bei 10m/s dispergiert und die übrigen Komponenten (6. und 7.) danach zugegeben | |
| 6 | Katalysator TIB KAT^{®}219 (81%ig in Xylol) (TIB Chemicals) | 13,4 |
| 7 | Lösemittelgemisch Xylol/MPA/BuAc 1:1:1 | 76,2 |

### aaa) Herstellung der 2K-PU-Lacke mit niedrigen Scherkräften:

Für die Aushärtung des Systems werden 85,5 g des hergestellten 2K-Polyurethanlacks mit 14,5 g von Desmodur^{®} N 3390 BA (Bayer) als Härterkomponente gemischt.

Dieser Mischung werden 2,5 g erfindungsgemäßes Pigment bzw. Vergleichspigment zugegeben und anschließend 10 Minuten mit einer Schergeschwindigkeit von 3m/s mittels eines DISPERMAT CV der Firma Getzmann, eingerührt. Nach der Applizierung und nach 10-minütiger Ablüftzeit bei Raumtemperatur und anschließend 30 Minuten forcierter Trocknung bei 60°C erfolgt die farbmetrische Vermessung.

### bbb) Herstellung der 2K-PU-Lacke mit hohen Scherkräften:

2,5 g erfindungsgemäßer Pigment bzw. Vergleichspigment werden zu 85,5 g des hergestellten 2K-Polyurethanlacks gegeben und mit einem Universalrüttler (Hausschild Engineering, DAC 150 Dual Asymmetric Centrifuge) für 120 min mit 2 mm Glasperlen in 250 ml Schraubdeckelglasflaschen dispergiert. Die Glasperlen werden anschließend entfernt.

Es werden 14,5g Härterkomponente in Form von Desmodur^{®} N 3390 BA (Bayer) zugegeben und für 10 Minuten mit einer Schergeschwindigkeit von 3m/s mittels eines DISPERMAT CV der Firma Getzmann, eingerührt.

**Tabelle 10: Farbmetrische Messwerte des 2K-PU-Lacks**

| **PU-Lacke** | **Feststoff** | **Scherenergien** | **L*** | **a*** | **b*** | **Y** | **F** | **F*** |
|---|---|---|---|---|---|---|---|---|
| VL4 | VP4 | hoch | 63,33 | 28 | 0,36 | 31,98 | 72,32 | 100,00 |
| VL4* | VP4 | niedrig | 71,44 | 24,3 | 1,05 | 42,83 | 38,15 | 52,76 |
| | | | | | | | | |
| L10 | P10 | hoch | 63,01 | 27,99 | 0,56 | 31,60 | 74,03 | 100,00 |
| L10* | P10 | niedrig | 65,23 | 27,71 | 0,32 | 34,34 | 62,78 | 84,80 |
| | | | | | | | | |
| L14 | P14 | hoch | 62,79 | 28,35 | 0,24 | 31,34 | 75,23 | 100,00 |
| L14* | P14 | niedrig | 62,89 | 28,12 | 0,19 | 31,46 | 74,68 | 99,27 |
| | | | | | | | | |
| L16 | P16 | hoch | 62,85 | 27,89 | 0,57 | 31,41 | 74,90 | 100,00 |
| L16* | P16 | niedrig | 63,57 | 27,94 | 0,45 | 32,28 | 71,05 | 94,86 |

Die PU-Lacke (L10, L14, L16) mit den erfindungsgemäßen Pigmenten P10, P14 und P16 weisen eine höhere Farbstärke auf als die der Vergleichs-PU-Lacke (VL4) mit dem Vergleichspigment VP4. Insbesondere ist aus Tabelle 9 zu entnehmen, dass die erfindungsgemäßen Pigmente eine gute bis sehr gute Dispergierbarkeit aufweisen, da kaum Farbstärke-Unterschiede zwischen einem Lack mit hoher und niedriger Scherenergie vorliegen.

### 3. Physikalische Beispiele

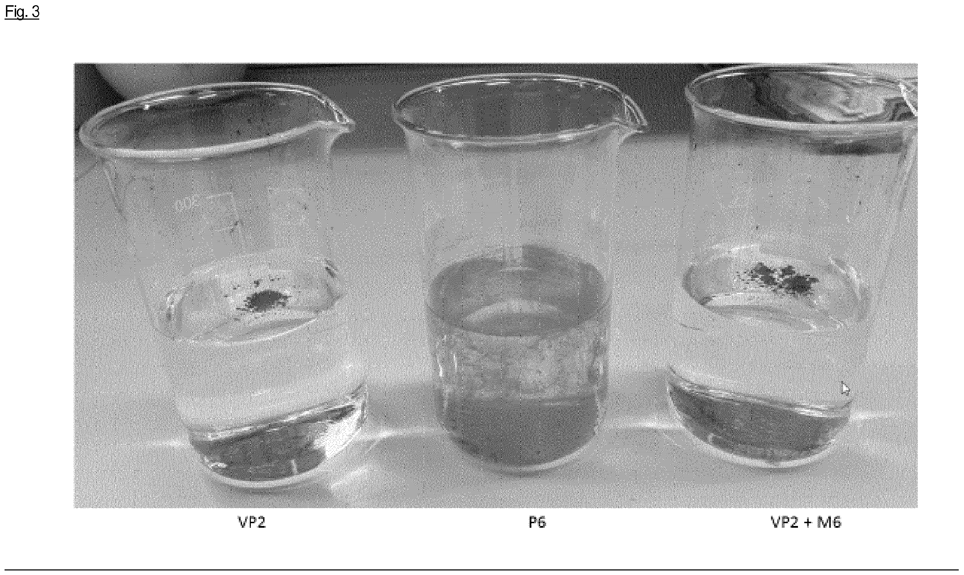

Fig. 3 zeigt die Dispergierbarkeit der erfindungsgemäßen Pigmente in Wasser auf. Im linken Glas wurde das Vergleichspigment VP2 (ohne grenzflächenaktive Verbindung) in Wasser gegeben. Das Vergleichspigment VP2 schwimmt auf der Wasseroberfläche. Im rechten Glas wurde VP2 und die grenzflächenaktive Verbindung M6 in Wasser gegeben. Auch hier schwimmt VP2 auf der Wasseroberfläche. Das mittlere Glas zeigt das erfindungsgemäße modifizierte Pigment P6 in Wasser. Ohne Verrühren lässt es sich bereits gut in Wasser dispergieren.

## Patentansprüche

1. Modifizierte organische Pigmente erhältlich durch Umsetzung der Pigmente während der Pigmentsynthese mit mindestens einer grenzflächenaktiven Verbindung, wobei die grenzflächenaktiven Verbindungen derart ausgewählt sind, dass sie innerhalb eines dreidimensionalen Hansen-Raumes liegen, wobei der Hansen-Raum durch drei Koordinaten, die sog. Hansen-Löslichkeitsparameter (Hansen Solubility Parameter = HSP), D=18,21, P=8,44, H=13,16 mit einem Radius von 6,7 Einheiten um den Mittelpunkt, bevorzugt D=18,21, P=8,44, H=13,16 mit einem Radius von 5,5 Einheiten um den Mittelpunkt, besonders bevorzugt D=18,21, P=8,44, H=13,16 mit einem Radius von 5,0 Einheiten um den Mittelpunkt, mithilfe der Software HSPiP, Version 5.0.0.4 bestimmt wird.

2. Modifizierte organische Pigmente nach Anspruch 1, **dadurch gekennzeichnet, dass** es sich bei den grenzflächenaktiven Verbindungen um chemische amphiphile, ionische, nichtionische, nieder- und/oder hochmolekulare Verbindungen handelt.

3. Modifizierte organische Pigmente nach Anspruch 1, **dadurch gekennzeichnet, dass** es sich bei den grenzflächenaktiven Verbindungen um polyethermodifizierte Fettsäuren, polyethermodifizierte Fettsäureamidamine, polyethermodifierte Aminderivate, Jeffamin-Derivate, polyethermodifizierte Öle und Fette und deren Derivate handelt.

4. Modifizierte organische Pigmente nach Anspruch 1, **dadurch gekennzeichnet, dass** es sich bei den grenzflächenaktiven Verbindungen um phosporylierte Polyether Derivate handelt, insbesondere auf Fettalkohol Basis.

5. Modifizierte organische Pigmente nach Anspruch 1, **dadurch gekennzeichnet, dass** es sich bei den grenzflächenaktiven Verbindungen um polyethermodifizierte Styrol Maleinsäure Copolymere und Maleinatharze.handelt,

6. Modifizierte organische Pigmente nach Ansprüchen 1 oder 2, **dadurch gekennzeichnet, dass** die Verbindungen eine oder mehrere Funktionalitäten aufweisen, die eine Affinität für die Pigmentoberfläche aufweisen.

7. Modifizierte organische Pigmente nach Anspruch 1, **dadurch gekennzeichnet, dass** die organischen Pigmente ausgewählt sind aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol- und Phtalocyaninpigmente.

8. Modifizierte organische Pigmente nach einem der vorgenannten Ansprüche, **dadurch gekennzeichnet, dass** die modifizierten Pigmente 5 bis 50 Gew.-% , bevorzugt 10 bis 40 Gew.-%, besonders bevorzugt 14 bis 35 Gew.-% grenzflächenaktive Verbindungen bezogen auf 100 Gew.-% der modifizierten organischen Pigmente aufweisen.

9. Verfahren zur Herstellung der modifizierten organischen Pigmente nach einem der vorgenannten Ansprüche, umfassend folgende Teilschritte
1) Synthese der Rohpigmente
2) Aufarbeitung der Rohpigmente durch Waschen und Filtration
3) Trocknung der Rohpigmente, wobei die grenzflächenaktiven Verbindungen während der Synthese der Rohpigmente, nach der Synthese der Rohpigmente oder nach der Aufarbeitung der Rohpigmente zugegeben werden.

10. Verfahren nach Anspruch 9, **dadurch gekennzeichnet, dass** die Zugabe der grenzflächenaktiven Verbindungen vor der Trocknung der Rohpigmente stattfindet.

11. Verfahren nach Anspruch 9, **dadurch gekennzeichnet, dass** die Zugabe der grenzflächenaktiven Verbindungen in wässriger Lösung, bevorzugt in alkalischer Lösung, durchgeführt wird.

12. Verwendung der modifizierten organischen Pigmente nach einem der vorgenannten Ansprüche zur Herstellung von Pigmentpräparationen.

13. Verwendung der modifizierten organischen Pigmente nach einem der vorgenannten Ansprüche zur Herstellung von Farben, Lacken, Druckfarben, Beschichtungsstoffen, Fußbodenbeschichtungen, Vergussmassen und Spachtelmassen.

## Claims

1. Modified organic pigments obtainable by reacting the pigments during the pigment synthesis with at least one interface-active compound, where the interface-active compounds are selected such that they are within a three-dimensional Hansen space, where the Hansen space is determined by three coordinates, called the Hansen solubility parameters (HSPs), D = 18.21, P = 8.44, H = 13.16 with a radius of 6.7 units about the centre, preferably D = 18.21, P = 8.44, H = 13.16 with a radius of 5.5 units about the centre, more preferably D = 18.21, P = 8.44, H = 13.16 with a radius of 5.0 units about the centre, with the aid of the HSPiP software, version 5.0.0.4.

2. Modified organic pigments according to Claim 1, **characterized in that** the interface-active compounds are chemical amphiphilic, ionic, nonionic compounds of low and/or high molecular weight.

3. Modified organic pigments according to Claim 1, **characterized in that** the interface-active compounds are polyether-modified fatty acids, polyether-modified fatty acid amide amines, polyether-modified amine derivatives, Jeffamine derivatives, polyether-modified oils and fats and derivatives thereof.

4. Modified organic pigments according to Claim 1, **characterized in that** the interface-active compounds are phosphorylated polyether derivatives, especially based on fatty alcohols.

5. Modified organic pigments according to Claim 1, **characterized in that** the interface-active compounds are polyether-modified styrene-maleic acid copolymers and maleate resins.

6. Modified organic pigments according to Claim 1 or 2, **characterized in that** the compounds have one or more functionalities having an affinity for the pigment surface.

7. Modified organic pigments according to Claim 1, **characterized in that** the organic pigments are selected from the group of the azo, diazo, condensed azo, naphthol, metal complex, thioindigo, indanthrone, isoindanthrone, anthanthrone, anthraquinone, isodibenzanthrone, triphendioxazine, quinacridone, perylene, diketopyrrolopyrrole and phthalocyanine pigments.

8. Modified organic pigments according to any of the abovementioned claims, **characterized in that** the modified pigments comprise 5% to 50% by weight, preferably 10% to 40% by weight, more preferably 14% to 35% by weight, of interface-active compounds based on 100% by weight of the modified organic pigments.

9. Process for producing the modified organic pigments according to any of the abovementioned claims, comprising the following component steps:
1) synthesizing the crude pigments
2) working up the crude pigments by washing and filtration
3) drying the crude pigments, with addition of the interface-active compounds during the synthesis of the crude pigments, after the synthesis of the crude pigments or after the workup of the crude pigments.

10. Process according to Claim 9, **characterized in that** the addition of the interface-active compounds takes place before the drying of the crude pigments.

11. Process according to Claim 9, **characterized in that** the addition of the interface-active compounds is conducted in aqueous solution, preferably in alkaline solution.

12. Use of the modified organic pigments according to any of the abovementioned claims for production of pigment preparations.

13. Use of the modified organic pigments according to any of the abovementioned claims for production of paints, varnishes, printing inks, coating materials, floor coatings, potting compounds and filling compounds.

## Revendications

1. Pigments organiques modifiés pouvant être obtenus par la réaction des pigments pendant la synthèse des pigments avec au moins un composé tensioactif, les composés tensioactifs étant choisis de façon à se trouver à l'intérieur d'un espace de Hansen tridimensionnel, l'espace de Hansen étant déterminé par trois coordonnées, ce que l'on appelle les paramètres de solubilité de Hansen (Hansen Solubility Parameter = HSP), D = 18,21, P = 8,44, H = 13,16 avec un rayon de 6,7 unités autour du centre, de préférence D = 18,21, P = 8,44, H = 13,16 avec un rayon de 5,5 unités autour du centre, d'une manière particulièrement préférée D = 18,21, P = 8,44, H = 13,16 avec un rayon de 5,0 unités autour du centre, par utilisation du logiciel HSPiP, Version 5.0.0.4.

2. Pigments organiques modifiés selon la revendication 1, **caractérisés en ce que**, pour ce qui concerne les composés tensioactifs, il s'agit de composés chimiques amphiphiles, ioniques, non ioniques, à faible et/ou à grande masse moléculaire.

3. Pigments organiques modifiés selon la revendication 1, **caractérisés en ce que**, pour ce qui concerne les composés tensioactifs, il s'agit d'acides gras modifiés par un polyéther, d'amidamines d'acides gras modifiés par un polyéther, de dérivés d'amines modifiés par un polyéther, des dérivés de Jeffamine, des huiles et graisses modifiées par un polyéther et de leurs dérivés.

4. Pigments organiques modifiés selon la revendication 1, **caractérisés en ce que**, pour ce qui concerne les composés tensioactifs, il s'agit de dérivés polyéthers phosphorylés, en particulier à base d'un alcool gras.

5. Pigments organiques modifiés selon la revendication 1, **caractérisés en ce que**, pour ce qui concerne les composés tensioactifs, il s'agit de copolymères styrène/acide maléique modifiés par un polyéther et de résines maléiques.

6. Pigments organiques modifiés selon la revendication 1 ou 2, **caractérisés en ce que** les composés contiennent une ou plusieurs fonctionnalités qui présentent une affinité pour la surface des pigments.

7. Pigments organiques modifiés selon la revendication 1, **caractérisés en ce que** les pigments organiques sont choisis dans le groupe des pigments azoïques, diazoïques, azoïques condensés, de naphtol, de complexes métalliques, de thioindigo, d'indanthrone, d'isoindanthrone, d'anthanthrone, d'anthraquinone, d'isodibenzanthrone, de triphendioxazine, de quinacridone, de pérylène, de dicétopyrrolopyrrole et de phtalocyanine.

8. Pigments organiques modifiés selon l'une des revendications précédentes, **caractérisés en ce que** les pigments modifiés comprennent 5 à 50 % en poids, de préférence 10 à 40 % en poids, d'une manière particulièrement préférée 14 à 35 % en poids de composés tensioactifs, pour 100 % en poids des pigments organiques modifiés.

9. Procédé de fabrication des pigments organiques modifiés selon l'une des revendications précédentes, comprenant les étapes partielles suivantes
1) synthèse des pigments bruts
2) traitement des pigments bruts par lavage et filtration
3) séchage des pigments bruts, les composés tensioactifs étant ajoutés pendant la synthèse des pigments bruts, après la synthèse des pigments bruts ou après le traitement des pigments bruts.

10. Procédé selon la revendication 9, **caractérisé en ce que** l'ajout des composés tensioactifs a lieu avant le séchage des pigments bruts.

11. Procédé selon la revendication 9, **caractérisé en ce que** l'ajout des composés tensioactifs est mis en œuvre en solution aqueuse, de préférence en solution alcaline.

12. Utilisation des pigments organiques modifiés selon l'une des revendications précédentes pour fabriquer des préparations pigmentaires.

13. Utilisation des pigments organiques modifiés selon l'une des revendications précédentes pour fabriquer des peintures, des vernis, des encres d'imprimerie, des matières de revêtement, des revêtements de sol, des masses de scellement et des produits de rebouchage.
